(19) Europäisches Patentamt
European Patent Office
Office européen des brevets

(11) **EP 2 477 476 B1**

(12) **EUROPEAN PATENT SPECIFICATION**

(45) Date of publication and mention
of the grant of the patent:
**14.08.2013 Bulletin 2013/33**

(51) Int Cl.:
***A01F 15/08*** *(2006.01)*

(21) Application number: **10768280.9**

(22) Date of filing: **13.09.2010**

(86) International application number:
**PCT/IB2010/002274**

(87) International publication number:
**WO 2011/033357 (24.03.2011 Gazette 2011/12)**

(54) **BALE CHUTE WEIGHING APPARATUS FOR CROP BALERS**

BALLENSCHACHTWIEGEVORRICHTUNG FÜR LANDWIRTSCHAFTLICHE PRESSEN

APPAREIL DE PESAGE SUR RAMPE DE CHARGEMENT DE BALLES POUR RAMASSEUSES-PRESSES À FOURRAGE

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **16.09.2009 US 243081 P**

(43) Date of publication of application:
**25.07.2012 Bulletin 2012/30**

(73) Proprietors:
• **AGCO Corporation**
**Duluth, GA 30096 (US)**
• **Digi-Star, LLC**
**Fort Atkinson, WI 53538 (US)**

(72) Inventors:
• **SEEGER, Jason**
**Newton, KS 67114 (US)**
• **WAGGONER, Robert**
**Hesston, KS 67062 (US)**
• **BRETZ, Brian**
**Buhler, KS 67522 (US)**
• **RETZLAFF, Lawrence, D.**
**Hesston, KS 67062 (US)**
• **ESAU, Edward, W.**
**Hesston, KS 67062 (US)**
• **EATON, David**
**Duluth, GA 30096 (US)**

(74) Representative: **AGCO Intellectual Property Department**
**AGCO Limited**
**Abbey Park Stoneleigh**
**Kenilworth, Warwickshire CV8 2TQ (GB)**

(56) References cited:
**EP-A1- 0 974 259**          **US-A- 5 760 344**
**US-A- 5 811 739**          **US-A1- 2008 141 870**
**US-A1- 2008 302 581**

**Description**

TECHNICAL FIELD

The present invention relates generally to crop baling machines of the type that pick up crop materials as the machine travels along the ground and then successively discharges formed bales from the rear discharge opening of the baler for deposit onto the ground via a downwardly inclined bale discharge chute. More particularly, it relates to a way of weighing each successive bale while it is on the discharge chute and before it reaches the ground.

United States Patent 5,760,344 discloses a mobile baler having a discharge opening through which bales issue in succession as the baler travels along the ground. The baler comprises a mobile chassis, a load sensor attached to the chassis, a support fixed to the load sensor for deflecting the sensor under load, and a bale discharge chute carried by the support and load sensor and positioned to receive bales issuing from the discharge opening. The support is configured to isolate a vertical load of a bale on the chute, and the sensor generates a signal for determining the weight of the bale.

BRIEF DESCRIPTION OF THE DRAWINGS

Figure 1 is a left side elevational view of a baler constructed in accordance with the principles of the present invention;
Fig. 2 is an enlarged, fragmentary, left rear perspective view of the baler;
Fig. 3 is an enlarged, fragmentary, top plan view of the baler;
Fig. 4 is an enlarged, fragmentary, left side elevational view of the baler;
Fig. 5 is a further enlarged, fragmentary, horizontal cross-sectional view of the upper left portion of the bale weighing apparatus taken substantially along line 5-5 of Fig. 4;
Fig. 6 is a further enlarged, fragmentary, horizontal cross-sectional view of the lower left portion of the bale weighing apparatus taken substantially along line 6-6 of Fig. 4;
Fig. 7 is a fragmentary, left side elevational view of a baler constructed in accordance with a second embodiment of the invention;
Fig. 8 is a flow diagram illustrating steps in a preferred bale weighing algorithm usable with a bale weighing apparatus in accordance with the principles of the present invention;
Fig. 9 is a flow diagram illustrating steps in a preferred algorithm for calibrating a bale weighing apparatus in accordance with the principles of the present invention;
Fig. 10 is a perspective view of the left, rear portion of a baler constructed in accordance with the principles of the present invention;
Fig. 11 is a elevational view of the left, rear portion of the baler;
Fig. 12 is a perspective close-up view of the lower left load sensor of the bale weighing apparatus of the baler; and
Fig. 13 is a perspective close-up view of the upper left tension link of the bale weighing apparatus of the baler.

OVERVIEW

In an example embodiment, a bale-weighing apparatus includes a support configured to isolated the vertical load of a bale on a bale chute and a load sensor configured to detect a resulting bending load of the isolated vertical load. In an example embodiment, the support comprises an arrangement of four bar linkage arranged in a parallelogram having three pivot points and a fixed point configured to isolate the vertical load of a bale without horizontal load so that detection of a resulting bending load by the load sensor can be used for determining the weight of the bale.

DETAILED DESCRIPTION

The present invention as defined in claims 1,3,5 and 18 is susceptible of embodiment in many different forms. While the drawings illustrate and the specification describes certain preferred embodiments of the invention, it is to be understood that such disclosure is by way of example only. There is no intent to limit the principles of the present invention to the particular disclosed embodiments.

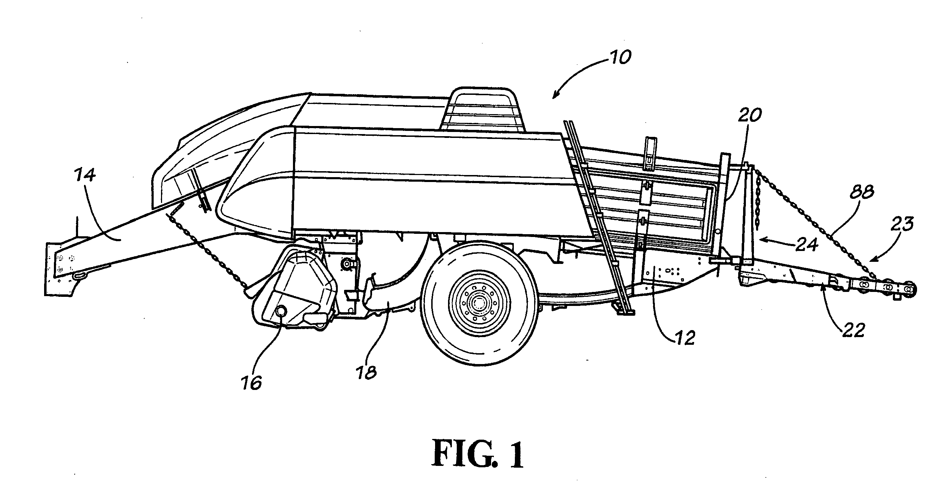

Referring initially to Fig. 1, a baler 10 is designed for producing "rectangular" bales in a manner well understood by those skilled in the art. Baler 10 has a wheeled chassis 12 that is provided with a tongue 14 at its front end for use in hitching baler 10 to a towing tractor or the like (not shown). As the baler 10 advances across a field with windrowed crop materials lying thereon, a pickup 16 lifts the crop materials off the ground and delivers them rearwardly for compaction within an upwardly and rearwardly curved duct 18 leading upwardly to a fore-and-aft, slightly downwardly and rearwardly inclined baling chamber (not visible). A reciprocating plunger (not shown) within the baling chamber compresses charges of crop material from duct 18 rearwardly within the baling chamber against previously compacted materials to progressively form a bale that incrementally moves rearwardly through the machine during each compaction stroke. In the illustrated embodiment, baler 10 is an extrusion type baler, having a rear discharge opening 20 that has a reduced cross-sectional dimension relative to the upstream baling chamber so as to cause resistance to the rearward advance of bales within the machine, thus providing a type of moving backstop against which the plunger can operate to compress the materials. Before issuing from and through discharge opening 20, the bales are wrapped by an appropriate mechanism (not shown) with a binding material to maintain the integrity of the bale after it has left the baler. A generally downwardly and rearwardly inclined chute 22 of a bale discharge chute assembly 23 at the rear of baler 10 accepts bales as they successively issue from discharge opening 20 and guides them by gravity toward the ground. Preferably, chute 22 is a roller type chute that minimizes the resistance to movement of the bales along and down the chute.

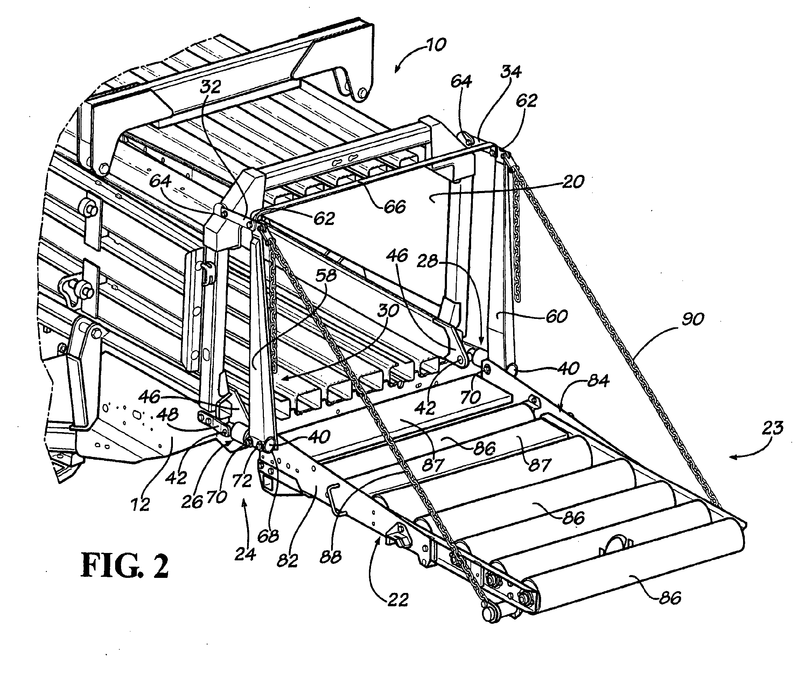

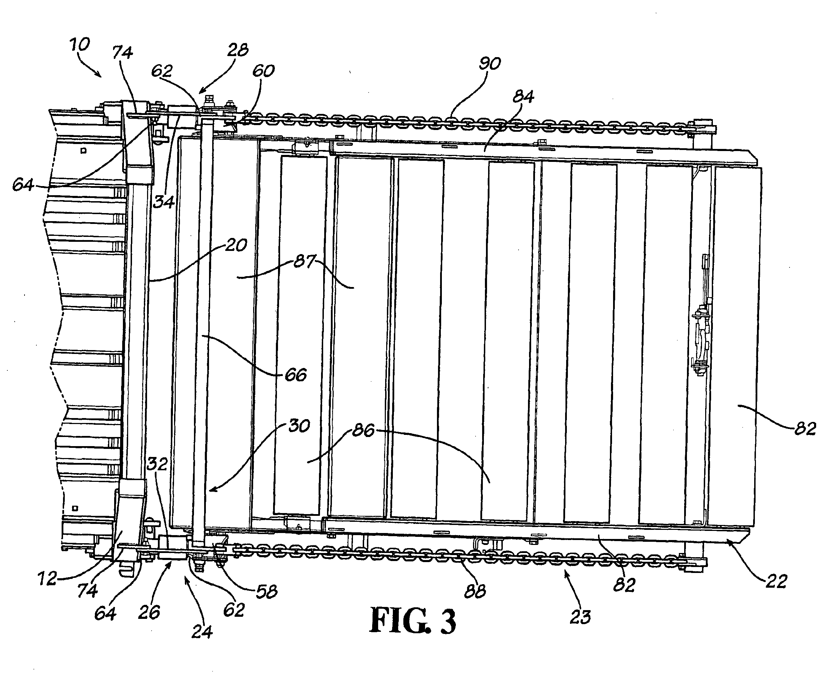

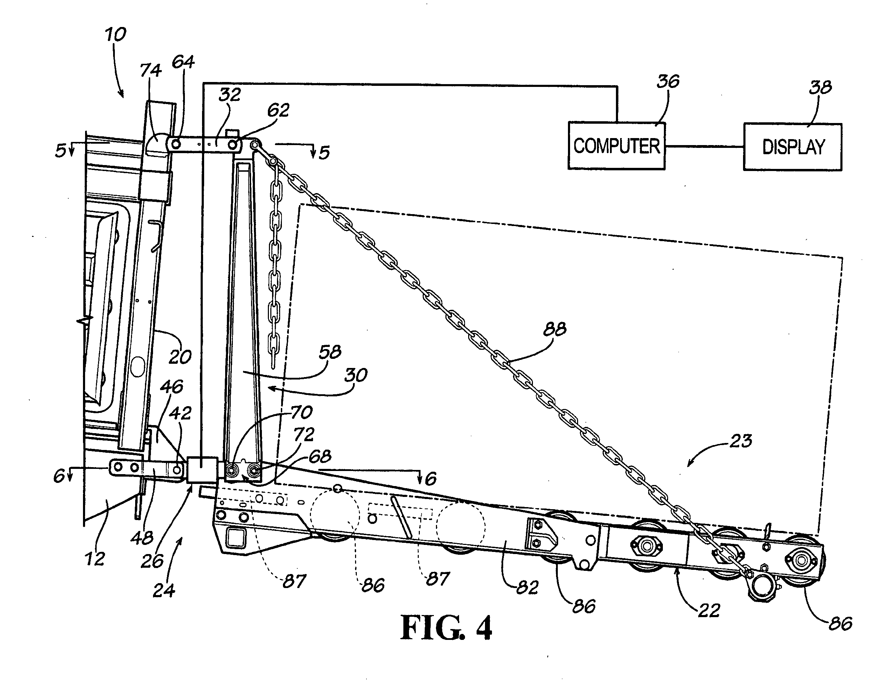

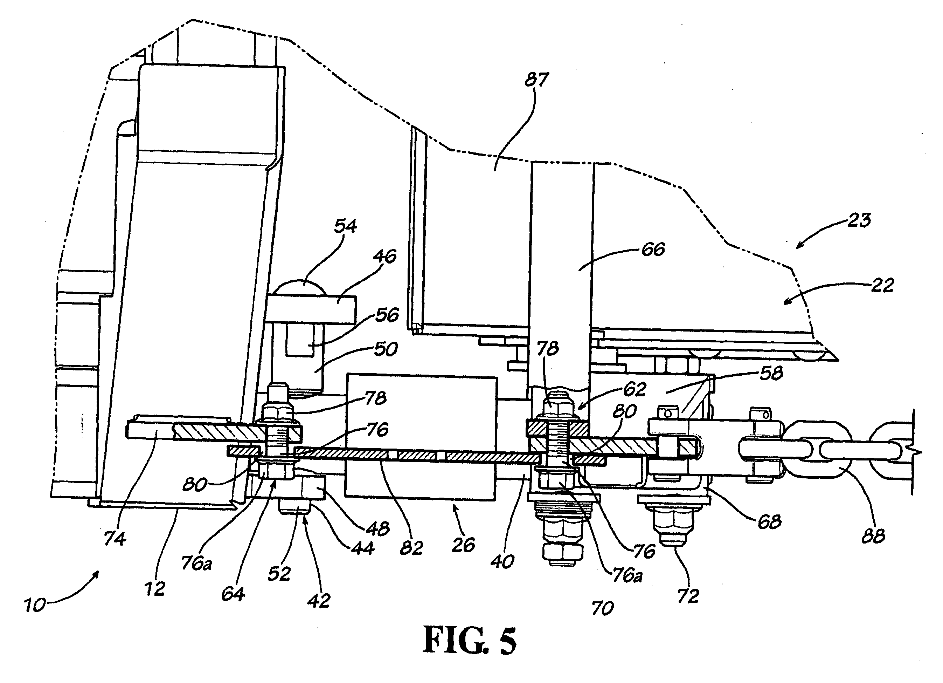

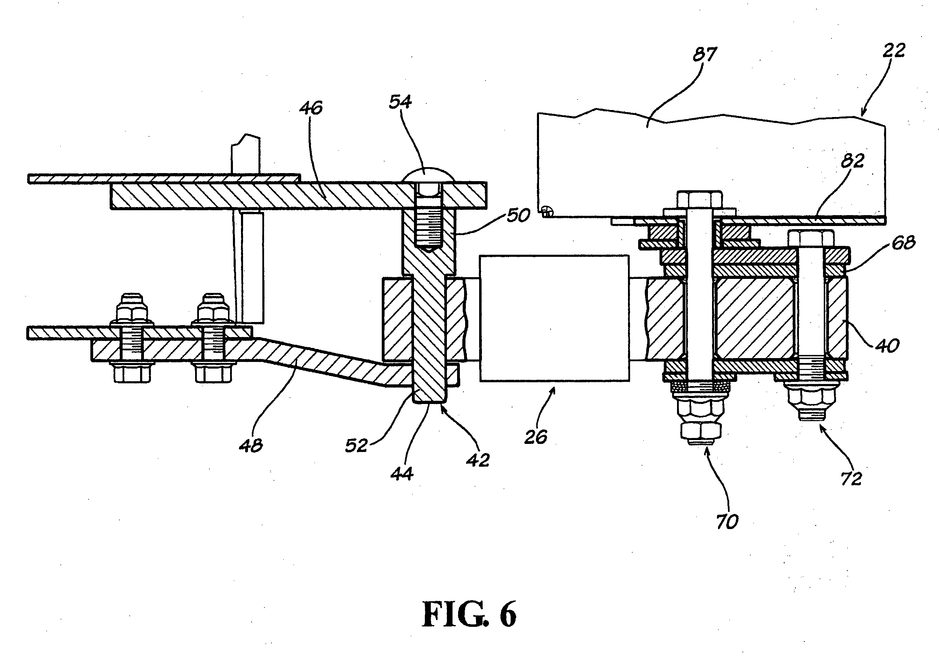

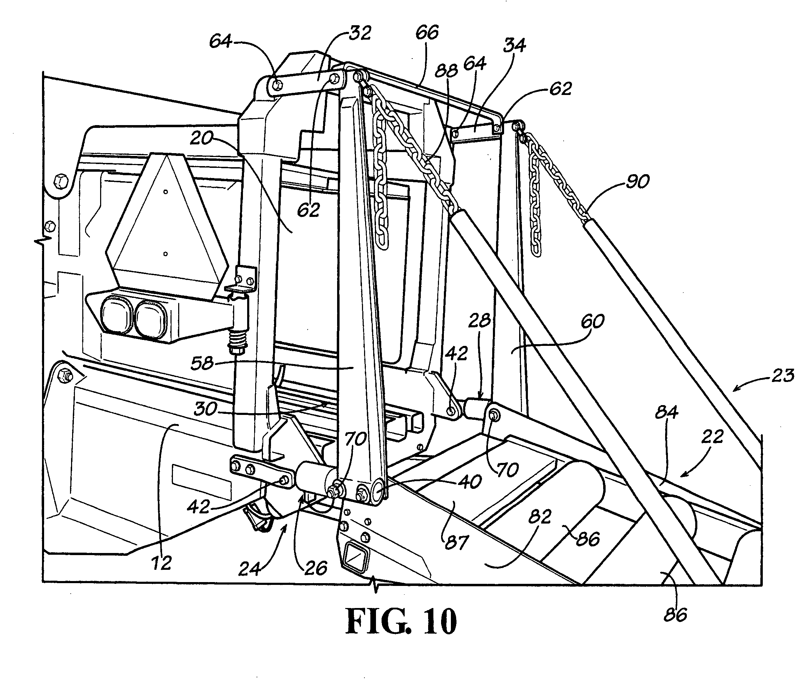

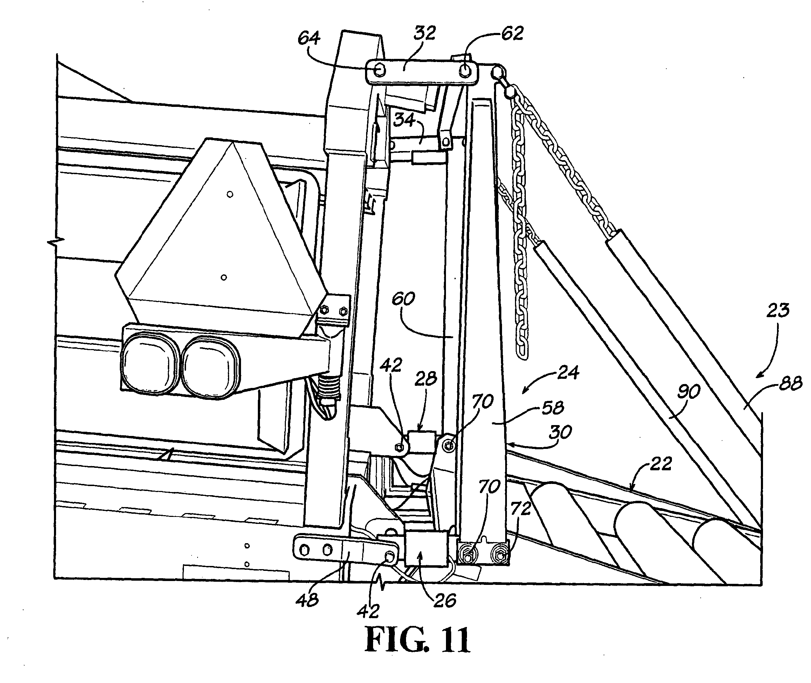

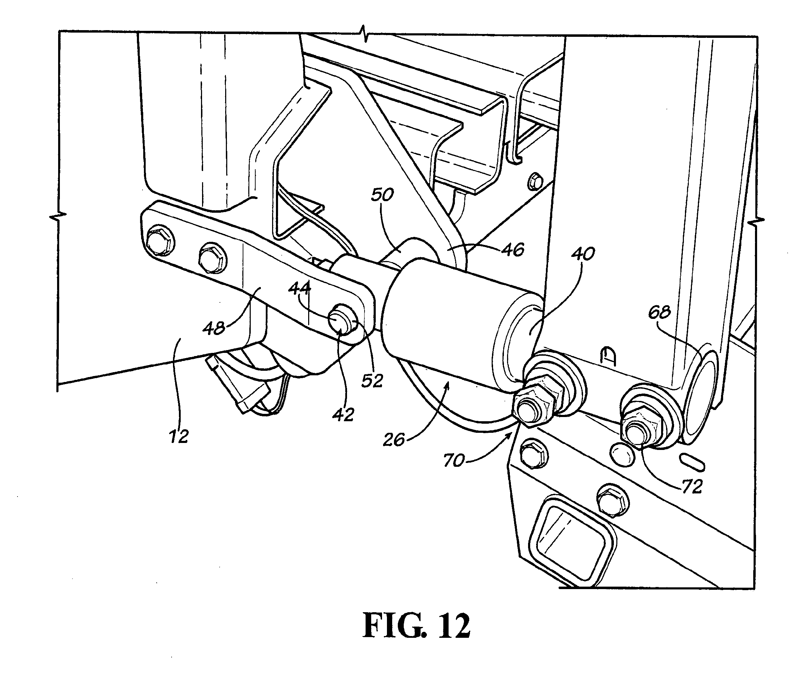

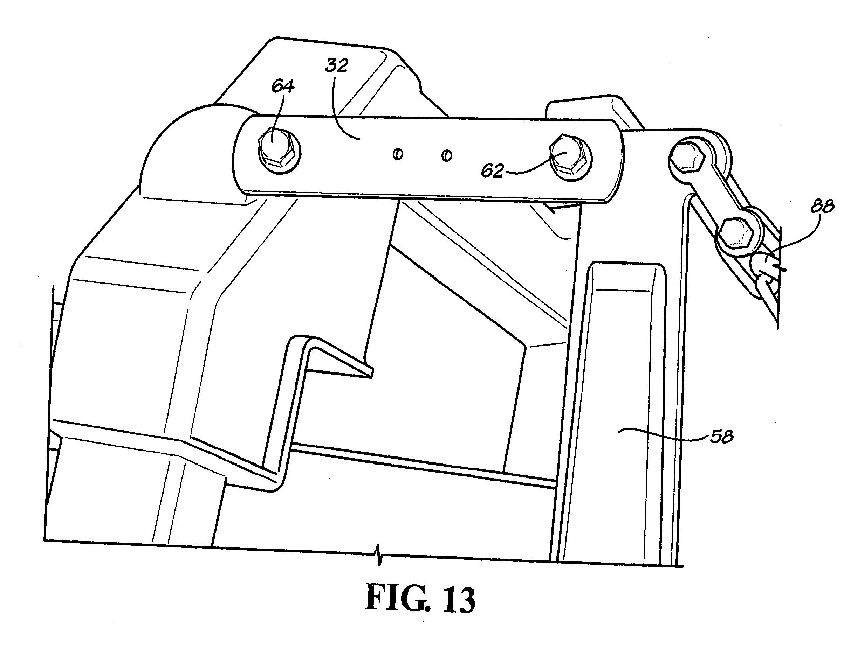

With particular reference to Figs. 2-6 and 10-13, discharge chute 22 is attached to chassis 12 of baler 10 through a bale weighing apparatus broadly denoted by the numeral 24. In the illustrated embodiment, weighing apparatus 24 includes a pair of load sensors 26 and 28 that are attached to chassis 12 at lower rear corners of discharge opening 20 and project horizontally rearwardly therefrom. Load sensors 26 are preferably of the type that react to bending loads placed thereon and may take the form of load cells available from Digi-Star, LLC of Fort Atkinson, WI as a Digi-Star load cell part no. 405589. Weighing apparatus 24 also includes a support in the nature of a support frame 30 that is fixed to load sensors 26, 28 and projects upwardly therefrom for connection at its upper extremity with the chassis 12 via a pair of tension links 32 and 34 that form components of support frame 30. In addition to load cells 26, 28 and support frame 30, weighing apparatus 24 also includes a computer component 36 electrically connected with load sensors 26, 28 for receiving and processing signals therefrom, and a display 38 electrically connected with computer component 36 and having the ability to display bale weight information to the operator in the tractor cab for the purpose of monitoring the weight and density of bales being made by the machine.

Each of the load sensors 26, 28 has an elongated, cylindrical beam 40 having a forward end that is loosely pivotally connected to chassis 12 at a transverse pivot assembly 42. The loose pivotal nature of the connection of beam 40 to chassis 12 helps achieve a higher level of accuracy in the bale weighing operation as described below in more detail. Preferably, the longitudinal axis of each load sensor 26, 28 extends substantially horizontally when baler 10 is on a level surface.

Each pivot assembly 42 includes a special transversely extending pin 44 that spans the distance between a rearwardly projecting ear 46 on chassis 12 and a rearwardly projecting strap 48. Pin 44 has an enlarged diameter shoulder 50 butting up against ear 46, and a reduced diameter shank 52 that passes loosely through beam 40 and the rear end of strap 48. Pin 44 is internally threaded to threadably receive a carriage bolt 54 having its enlarged head disposed on the far side of ear 46. Wrench flats such as at 56 may be provided on the exterior of shoulder 50 to enable pin 44 to be gripped and rotated while installing it on carriage bolt 54. Of significant importance is the fact that the distance along shank 52 between shoulder 50 and the inside surface of strap 48 is greater than the outer diameter of beam 40. Consequently, beam 40 is free to slide along shank 44 between shoulder 50 and strap 48 to such an extent as to preclude a clamping or gripping action of the beam 40 at its connection to chassis 12. Thus, in this respect the connection of each load sensor 26, 28 to chassis 12 is in the nature of a loose pivotal connection.

In addition to tension links 32, 34, support frame 30 includes a pair of upright members 58 and 60 on opposite lateral sides of bale chute 22 that are fixed at their lower ends to the rear end portions of beams 40 of load sensors 26 and 28. At their upper end portions, upright members 58, 60 have loose pivotal connections with the rear ends of tension links 32, 34 at pivot assemblies 62. The connection of tension links 32, 34 to chassis 12 is also via a pair of loose pivot assemblies 64, similar in principle to the loose pivot assemblies 42 between load sensors 26, 28 and baler chassis 12. A transversely extending tie bar 66 interconnects upright members 58, 60 at their upper end portions to keep members 58, 60 from spreading apart and forms another part of support frame 30. In a most preferred form of the invention, tension links 32, 34 extend horizontally when baler 10 is on a level surface; further, the longitudinal axis of each upright member 58, 60 extends substantially vertically when baler 10 is on a level surface.

It is preferred that the upright longitudinal axis of each upright member 58, 60 intersect the longitudinal axis of the corresponding load sensor 26 or 28 at right angles thereto. To facilitate this orientation and to help achieve a rigid connection between each upright member 58, 60 and the corresponding load sensor 26,28, the lower end portion of each upright member 58, 60 is provided with a fore-and-aft extending, cylindrically shaped socket 68 having an internal diameter that is only slightly larger than the external diameter of the load sensor beam 40. Beam 40 is received within socket 28 and is held against movement relative thereto by a pair of transverse bolt assemblies 70 and 72. Rear bolt assembly 72 is a standard bolt assembly passing through both socket 68 and beam 40. However, bolt assembly 70 serves not only as a means for fastening upright member 58, 60 to the corresponding beam 40, but also as a means for pivotally connecting the chute 22 with members 58, 60 and load sensors 26, 28. Thus, bolt assembly 70 also passes through mounting portions of the chute 22 and includes means well understood by those skilled in the art for providing a relatively snug, yet pivotal connection between chute 22 and upright members 58, 60.

The two upper loose pivot assemblies 62, 64 at opposite ends of each tension link 32 are constructed in such a way as to yield substantially the same result as the lower loose pivot assembly 42 for each load sensor 26, 28, although the specific construction for accomplishing such result differs somewhat. Using loose pivot assembly 64 as an example, a mounting tab 74 is rigidly affixed to chassis 12 and projects rearwardly therefrom. A bolt 76 passes through aligned holes in tension link 32 and mounting tab 74 and has a nut 78 threaded onto the distal end of bolt 76. A bushing 80 surrounds the portion of bolt 76 between head 76a thereof and mounting tab 74 and is clamped between head 76a and tab 74 by nut 78. The hole in tension link 32 is slightly larger than the outside diameter of bushing 80, and the length of bushing 80 slightly exceeds the thickness of tension link 32 such that tension link 32 is loosely received on bushing 80 and is free to move slightly axially therealong. Although there is no need or desire to provide significant movement of link 32 along bushing 80, it is highly desirable to avoid a situation in which link 32 becomes clamped between bolt head 76a and mounting tab 74. In this way, the formation of a moment at pivot assembly 64 can be substantially if not entirely avoided, which is highly beneficial insofar as achieving accurate measurement of vertical loading on load sensors 26, 28 is concerned. In one exemplary embodiment, link 32 has freedom to move axially along bushing 80 a distance ranging from 0.15875 to 0.3175 cm (1/16th to 1/8th of an inch).

Loose pivot assembly 62 is virtually identical to loose pivot assembly 64, with the exception that an additional component is disposed within the clamped up portion of the assembly, namely a downturned leg of the tie bar 66. The leg of tie bar 66 is clamped between the nut 78 and the corresponding upright member 58 or 60, while the bushing 80 is clamped between the head 76a of bolt 76 and the outboard side of upright 58 or 60. Because the hole through the rear end of tension link 32 is slightly larger than the outside diameter of bushing 80, and because the length of bushing 80 slightly exceeds the thickness of tension link 32, tension link 32 is free to shift a short distance axially along bushing 80 at loose pivot assembly 62 in the same manner and to the same degree as loose pivot assembly 64.

Discharge chute assembly 23 is of conventional construction. Chute 22 thereof is formed by pair of laterally spaced apart, fore-and-aft extending side rails 82 and 84 and a plurality of transverse anti-friction rollers 86 and non-rotatable plates 87. Discharge chute assembly 23 further includes a pair of tension elements in the form of link chains 88 and 90 that are connected between the outer end portion of chute 22 and upper end portions of the respective upright members 58, 60. Chains 88, 90 are adjustable in length such that the angle of incline of chute 22 can be adjusted as deemed necessary or desirable. Manifestly, chute 22 is biased yieldably downwardly by gravity such that chains 88, 90 limit the downswing of chute 22 about pivot bolts 70, the selected downwardly inclined position of chute 22 thus establishing its lowered, discharge position. On the other hand, chute 22 may be raised by means not shown to pivot about pivot bolts 70 until in a generally upright position (not shown), which establishes a folded-up transport position. Means not shown may be provided for releasably retaining the chute 22 in its transport position. During any and all of such swinging movement of the chute 22, the positions of load sensors 24, 26 and support frame 30 remain unchanged, i.e., support frame 30 and load sensors 26, 28 do not move with chute 22 during any of its up and down, swinging movement.

OPERATION

In a most preferred form of the invention, the load cells 26, 28 and the tension links 32, 34 are maintained in a horizontal attitude when baler 10 is on level ground. In addition, the longitudinal axis of each upright member 58, 60 is maintained in a vertical orientation. In this way, the weight of the chute assembly 23, the bale thereon, upright members 58, 60 and tie bar 66 can be completely isolated from baler chassis 12 and directed to load cells 26, 28. The weight of the non-bale components can be subtracted out, leaving a highly accurate value for the weight of the bale itself. While it is not absolutely critical that load sensors 26, 28 and tension links 32, 34 be kept horizontal while upright members 58, 60 are kept vertical (as the departure from true horizontal and true vertical can be factored out), such an arrangement is best and provides the most reliably accurate results with the least complexities.

The vertical load of the bale chute 22 at its forward end is directed to the load cells 26, 28 by pivot assemblies 70. In addition, the remainder of the load from the outer end portion of chute 22 is transmitted to the load cells 26, 28 via chains 88, 90 and upright members 58, 60. Although chains 88, 90 impart both vertical and horizontal loads to the upper end of upright members 58, 60, only the horizontal loads are experienced by tension links 32, 34 because of their horizontal attitudes. The vertical loads at the upper ends of upright members 58, 60 are transmitted vertically downwardly to load cells 26, 28. No part of the vertical loads from chains 88, 90 are transmitted back to baler chassis 12 via tension links 32, 34 due to the horizontal attitudes of links 32, 34. Having the right angle joint between upright members 58, 60 and their respective load sensors 26, 28 "stiff" or "fixed" instead of pivotal in nature permits the support frame 30 and load sensors 26, 28 to remain fixed and immobile, somewhat in the nature of an extension of the rear end of baler 10, instead of being collapsible in the nature of a four bar linkage or parallelogram.

With upper tension links 32, 34 in a horizontal attitude when baler 10 is on level ground, no vertical load component of chute 22 is transmitted back to baler chassis 12 at that upper location. Consequently, the entire vertical load of chute 22, and the bale thereon, is directed down to load sensors 26, 28 before being transmitted to baler chassis 12 through pivot assemblies 42. The absence of tight clamping relationships at pivot joints 62 and 64 is helpful in avoiding the transfer of vertical loads at those locations.

It will be noted that the bale weighing apparatus 24 remains in a fixed position regardless of the selected angular position of bale chute 22. Thus, load sensors 26, 28 remain at a constant known angle, preferably horizontal, regardless of the position of chute 22. Consequently, there is no need to change the calculations associated with processing the signals from load sensors 26, 28 to account for angle changes in those sensors. Thus, the lengths of chains 88, 90 can be shortened or lengthened as may be necessary to provide the most desirable angle of inclination of chute 22 without in any way adversely affecting load sensors 26, 28. Load sensors 26, 28 see only the vertical load of the bale on chute 22, regardless of the angle of inclination of the chute.

Having load sensors 26, 28 and support frame 30 of the bale weighing apparatus 24 effectively serve as an extension of the rear end of the baler also permits chute 22 to be folded up about pivots 70 into a transport position to shorten the overall length of the baler and towing tractor combination so as to meet road length requirements and to keep the next bale in the baling chamber from accidently dislodging from the chamber and sliding down the chute during over-the-road travel.

In its most preferred form, the present invention contemplates isolating bale chute 22 from baler 10 in such a manner that all of the weight of chute 22 (and the bale thereon) must be directed to load sensors 26, 28 before reaching chassis 12. Thus, it can be assured that accurate and reliable bale weight data is harvested, with little or no vertical load reaching baler chassis 12 that has bypassed load sensors 26, 28.

As a bale emerges from rear discharge opening 20 and becomes fully supported by chute 22, the load information is gathered during the entire time the bale is on chute 22 and traveling therealong. In actual field operations, it has been found that an elapsed time of between approximately .70 and 1.50 seconds is typically available to weigh the moving bale before it entirely leaves chute 22. Although the bale exerts weight on the bale chute 22 before completely breaking free of discharge opening 20, and also during the instant that it tips off the last roller on the chute, it is the interval between breaking free of the discharge opening 20 and tipping off the bale chute that the most meaningful data exists to be collected. The present invention provides that beneficial result.

The computing component 36 is electrically or communicably coupled with the load sensors 26, 28 in such a manner that values obtained by the load sensors 26, 28 are conveyed to the computing component 36 for calculating the weight of a bale using a bale weight algorithm, as hereinafter described in more detail. The computing component 36 is coupled to or may further comprise the display 38, which may include a user interface.

The computing component 36 may include any number of processors, controlling devices, integrated circuits, programmable logic devices, or other computing devices and resident or external memory (not shown) for storing data and other information accessed and/or generated by the load sensors 26, 28, display 38, user interface, or other inputs. The memory may include, for example, removable and non-removable memory elements such as RAM, ROM, flash, magnetic, optical, USB memory devices, and/or other conventional memory elements.

The display 38 may be operable to display various information corresponding to load sensor readings and/or weight of the bale. The display 38 may comprise conventional black and white, monochrome, or color display elements including CRT, TFT, LCD, and/or plasma display devices. In various embodiments of the invention, the display may be a touch-screen display to enable the user or operator to interact with it by touching or pointing at display areas to provide information to the computing component 36.

The user interface may comprise one or more functionable inputs such as buttons, switches, scroll wheels, a touch screen associated with the display, voice recognition elements such as a microphone, pointing devices such as mice, touchpads, tracking balls, styluses, a camera such as a digital or film still or video camera, combinations thereof, etc. Further, the user interface may comprise wired or wireless data transfer elements such as a removable memory, data transceivers, etc., to enable the user and other devices or parties to remotely interface the computing component. Additionally or alternatively, the user interface may include a TransFlash card slot for receiving removable TransFlash cards and a USB port for coupling with a USB cable connected to another computing device such as a personal computer. The user interface may allow the user, operator, or an external device to specify correction factors or other calibration data, as described below.

In one exemplary embodiment, display 38 may comprise a commercially available model C-1000 or C-2000 AGCO Virtual Terminal located in the tractor cab, or any other ISO 11783 terminal, while the computer component 36 may comprise a commercially available AGCO Square Baler Controller identified as AGCO part designation SBC 700735139. If necessary, the Square Baler Controller may be coupled with and assisted by a Dickey-John programmable square baler expansion module commercially available as Dickey-John part number 467821010.

A computer program may be stored in or on a computer-usable medium, such as a computer-readable medium, residing on or accessible by the computing component 36 to implement the method as described herein. The computer program may comprise an ordered listing of executable instructions for implementing logical functions in the computing component and other computing devices coupled with the computing component. The computer program can be embodied in any computer-usable medium for use by or in connection with an instruction execution system, apparatus, or device, such as a computer-based system, processor-containing system, or other system that can fetch the instructions from the instruction execution system, apparatus, or device, and execute the instructions.

The ordered listing of executable instructions comprising the computer program will hereinafter be referred to simply as "the program" or "the computer program." It will be understood by those skilled in the art that the program may comprise a single list of executable instructions or two or more separate lists, and may be stored on a single computer-usable medium or multiple distinct media. The program will also be described as comprising various "code segments," which may include one or more lists, or portions of lists, of executable instructions. Code segments may include overlapping lists of executable instructions, that is, a first code segment may include instruction lists A and B, and a second code segment may include instruction lists B and C.

In the context of this document, a "computer-usable medium" or a "computer-readable medium" can be any means that can contain, store, communicate, propagate or transport the program for use by or in connection with the instruction execution system, apparatus, or device. The computer-usable medium can be, for example, but is not limited to, an electronic, magnetic, optical, electro-magnetic, infrared, or semi-conductor system, apparatus, device, or propagation medium. More specific, although not inclusive, examples of computer-usable media would include the following: an electrical connection having one or more wires, a portable computer diskette, a random access memory (RAM), a read-only memory (ROM), an erasable, programmable, read-only memory (EPROM or Flash memory), an optical fiber, and a portable compact disk read-only memory (CDROM). The bale weight algorithm in accordance with the present invention may be implemented by one or more code segments stored on the computer-readable medium as described above.

The above described system may be used to implement a method of weighing a moving bale on the bale chute 22. The method broadly comprises the steps of collecting samples or data points from the load sensors 26, 28 and subtracting a value corresponding with the weight sensed by the load sensors when no bale is positioned on the bale chute 22 from a value corresponding with the weight sensed by the load sensors 26, 28 when the bale is fully supported by the bale chute 22 to solve for difference value corresponding with the weight of the bale. Calculating load sensor output slope information regarding collected samples assists in identifying when the bale has dropped off of the bale chute 22. Determining maximum values received by the load sensors 26, 28 between a starting sample and the sample when the bale has dropped of the chute 22 may be used to identify when the bale is fully supported by the bale chute 22. Additionally, averaging steps described below assist in eliminating inconsistent and/or inaccurate information from the calculations.

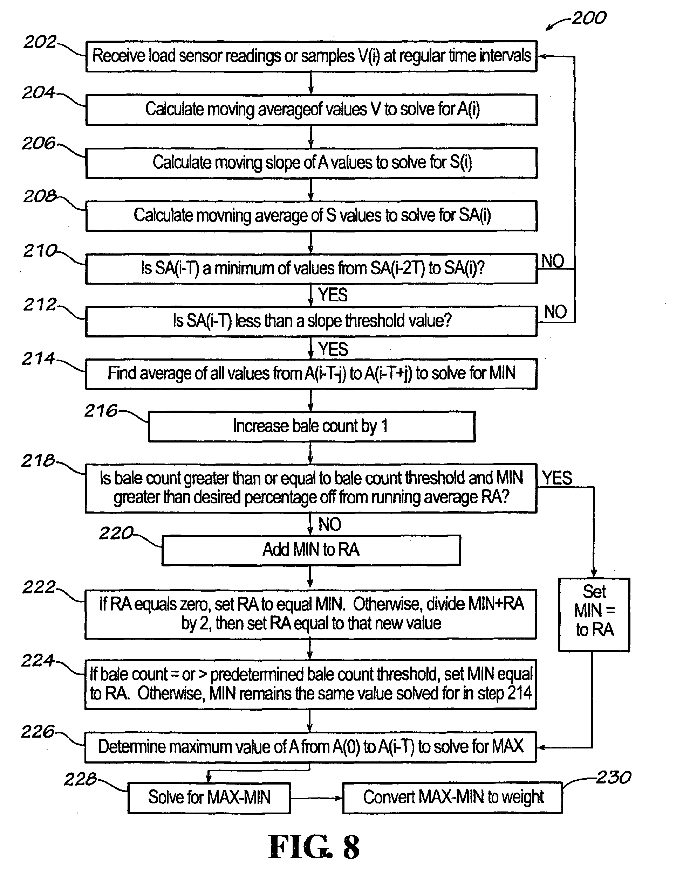

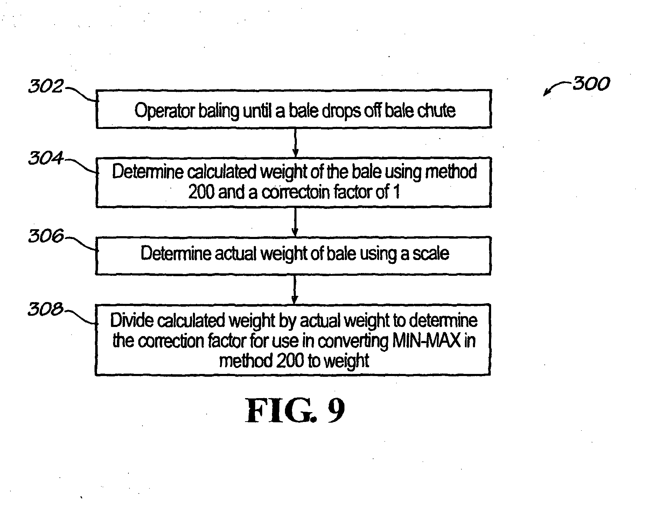

The flow charts of Figs. 8 and 9 depict the steps of exemplary methods in accordance with the invention. Specifically, method 200 of performing the bale weight algorithm is depicted in Fig. 8 and described below. Additionally, Fig. 9 depicts method 300 of a calibration procedure which may be used by the bale weight algorithm to determine a correction factor, as described below. Some of the blocks of the flow charts may represent a module segment or portion of code of the computer programs stored in or accessible by the computing component. In some alternative implementations, the functions noted in the various blocks may occur out of the order depicted in Figs. 8, 9. For example, two blocks shown in succession in Figs. 8, 9 may in fact be executed substantially concurrently, or the blocks may sometimes be executed in the reverse order depending upon the functionality involved.

First, as depicted in step 202, the computing component may obtain load sensor readings or samples at regular intervals. Values (V) of each sample (i) may be stored in memory. Samples i may be whole numbers starting at i=0 and end at i=k. Note that k may be equal to any whole number of samples, and i does not necessarily begin at zero, but may begin at any sample point. Note that values V are directly proportional to weight placed onto the load sensor(s), such that as greater weight is placed onto the bale chute, greater values V are obtained.

Next, as depicted in step 204, multi-point moving averages of values V(i) may be calculated to solve for A(i). For example, a 10-point moving average of data from step 202 may be obtained, such as:

$$(V(i\text{-}9)+V(i\text{-}8)+V(i\text{-}7)+V(i\text{-}6)+V(i\text{-}5)+V(i\text{-}4)+V(i\text{-}3)+V(i\text{-}2)+V(i\text{-}1)+V(i))/10 = A(i).$$

However, note that the moving average may be centered at sample point i, may start with sample point i, or may end with sample point i, as in the example above. So, in the example above, the average A at i+1 would add values from V(i-8) to V(i+1) and then divide by 10 to obtain A(i+1). This step 204 serves to smooth out the reading values obtained at each sample point to avoid errors or data spikes to create errors or inaccuracies in the weight calculations.

As depicted in step 206, a multi-point moving slope of A(i) is calculated at each sample point i to solve for S(i). Then, as depicted in step 208, a multi-point moving average of S(i) values are calculated to solve for SA(i). As noted above, the window of the moving average may include any number of sample points and may start at, end at, or be centered about sample point i. Calculating the moving slope allows the computing component and/or user to determine if the bale is moving onto or dropping off of the bale chute 22. For example, as the bale moves onto the bale chute 22, the values at the sample points gradually increase and the slopes therefore would be positive. However, as the bale is dropping off of the chute 22, the slopes of the values at the sample points would be negative. In fact, because the chute 22 may go from supporting the full weight of the bale to the bale completely tipping off the end of the chute 22, the slope at these data points may drop quite sharply.

Next, the slope values may also be "smoothed out" by a moving average or an averaging window. Specifically, it may be determined if SA(i-T) is a minimum of all values from SA(i-2T) to SA(i), as depicted in step 210. In some embodiments of the invention, T may represent how many samples back the sample to be reviewed will be. So, for example, if T equals 9, the value SA(i-9) is analyzed to determine if it is the local minimum. Note that any number of samples on either side of the sample at i-T may be compared with i-T to determine if SA(i-T) is the local minimum. However, in this example, values from SA(i-2T) to SA(i) are analyzed.

If SA(i-T) is not the local minimum, the computing component may continue to collect samples until it does find a sample point i at which SA(i-T) is the local minimum. If SA(i-T) is the local minimum, then, as depicted in step 212, it is determined if the value SA(i-T) is less than a slope threshold value. For example, a slope threshold value may be -120,000. If the value SA(i-T) is not less than the slope threshold value, then the computing component may continue to collect and analyze samples until this condition is met. However, if the value SA(i-T) is less than the slope threshold value, then it may be assumed that a bale fell off of the chute at or around that data point i-T, and step 214 may be followed to solve for an average minimum value MIN. MIN may be solved by finding the average of all values from A(i-T-j) to A(i-T+j), where j may be any number of samples. For example, j may be equal to 2 samples. Note that step 214 uses an average of several samples proximate A(i-T) to increase the accuracy of the weight calculations. However, in some alternative embodiments of the invention, step 214 may be omitted and MIN may be set equal to A(i-T).

Next, as depicted in step 216, a bale count variable may be increased by 1. The bale count variable may be used if it is desired to keep a running average (RA) of a plurality of MINs of previous bales. In an ideal situation, the minimum values received by the computing device represent load sensor readings when nothing is on the bale chute 22, and therefore correspond with the bale chute's weight and that of support frame 30. The weight of chute 22 and support frame 30 should ideally not change. Therefore, by keeping a running average of MIN values as solved for above, a more accurate, consistent MIN value corresponding to the weight of chute 22 and support frame 30 may be used in calculating the weight of the bale.

If the bale count is equal to or greater than a predetermined bale count thereshold (for example, 5 bales), and MIN is greater than a desired percentage off from the running average (RA), MIN may be reset to equal the value of RA, as in step 218, and steps 220-224 (described below) may be skipped. So, for example, if MIN is greater than plus or minus 10% off from RA, it may not be added to the running average and may not used in the weight calculations, since it is probably an error. Therefore, MIN may be reset to equal the value of RA for the remaining steps in calculating the weight of the current bale.

If the bale count is not equal to or greater than the predetermined bale count thereshold and/or MIN is not greater that the desired percentage off from the running average, then MIN, as calculated in step 214, is added to RA, as depicted in step 220. Next, as depicted in step 222, if RA equals zero, RA may be reset to equal MIN. If RA does not equal zero, as also depicted in step 222, MIN + RA may be divided by 2 and then RA may be reset to equal that new value. In other words, the MIN of the present bale is figured into the running average of the MINs of each bale.

Next, as depicted in step 224, if the bale count is equal to or greater than the predetermined bale count threshold (for example, 5 bales), reset MIN to equal the value of RA. Otherwise, MIN remains the same value solved for in step 214. Therefore, as shown in the steps above, a variety of methods may be used to find a minimum value MIN, which should be a value directly proportional to an approximate weight of the bale chute and support frame without the bale supported thereon.

As depicted in step 226, a maximum value A(max) from A(0) to A(i-T) may be determined. Additionally, average points from A(max-j) to A(max+j) may be used to solve for MAX, such that errors or inconsistencies at i=max do not cause bale weight errors. In some embodiments of the invention, the maximum and minimum values between A(max-j) and A(max+j) may be omitted from the averaging to solve for MAX, thereby further filtering out any errors or outliers. However, in alternative embodiments of the invention, MAX may simply equal A(max).

As depicted in step 228, a difference between MAX and MIN may then be calculated and then divided or multiplied by a conversion factor, if required, to obtain an estimated bale weight. For example, in some embodiments of the invention, the difference between the MAX and MIN may be divided by the conversion factor, such as 454, and then multiplied by a correction factor. The correction factor may be set to 1 until a calibration procedure (described below) is performed to determine how much correction is required. In this example, 454 may represent a conversion from voltage to weight, or voltage to digital counts, to weight, with 454 representing the number of digital counts received per pound. Though this conversion step is illustrated at the end of method 200, the values used herein may be converted into corresponding weight values at any point during the bale weight algorithm method described above.

A calibration procedure 300 for determining the correction factor for the algorithm described above may comprise an operator baling until a bale drops off the bale chute, as depicted in step 302. Next, a calculated weight of the bale may be determined by the method 200 above, using a correction factor of 1, as depicted in step 304. Then, to determine an actual weight of the bale, the operator may weigh the bale that dropped off using a scale or the like, as depicted in step 306. Then the calculated weight may be divided by the actual weight to determine the correction factor, as depicted in step 308. The correction factor may be calculated by any means, including a calibration computer program or code segment executed by the computing component 36 and operable to provide a prompt for the actual weight, to be entered or otherwise provided by the operator. The calibration computer program or code segment may then instruct the computing component 36 to calculate the calibration factor by dividing the calculated weight by the actual weight.

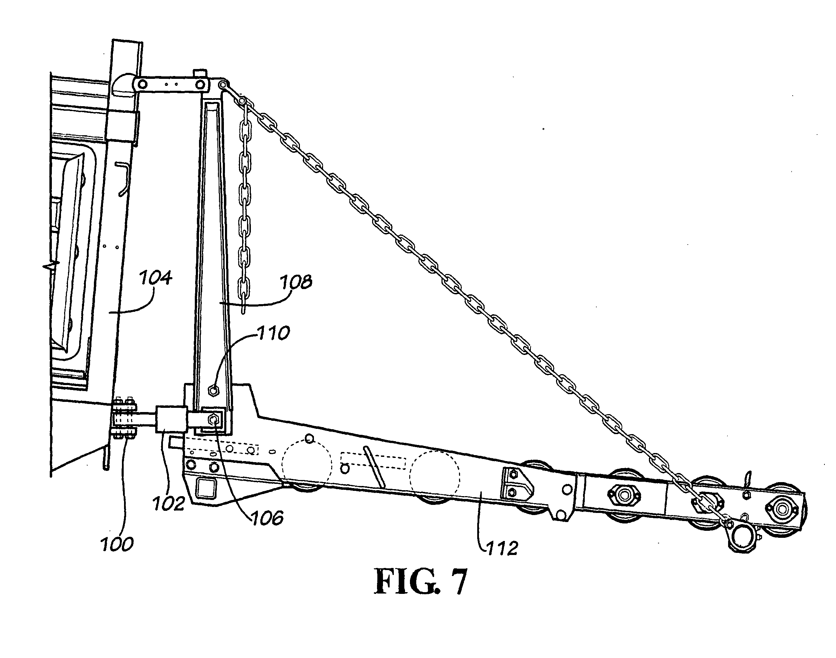

Fig. 7 illustrates an alternative embodiment of the invention in which the front connection 100 between the load sensor 102 and the chassis 104 is "stiff" (non-pivotal about a transverse horizontal axis) and the rear connection 106 between the load sensor 102 and the upright member 108 is freely pivotal about a transverse horizontal axis. The pivot connection 110 between chute 112 and upright member 108 is located above or below rear connection 106 and is a semi-clamped connection to permit chute 112 to be folded-up to a transport position but resist bouncing up and down relative to upright member 108 when rough terrain is encountered while in the lowered discharge position as illustrated. All other components and relationships are the same as in the first embodiment.

In both embodiments, substantially the same degree of weighing accuracy can be achieved. In both embodiments the weight of the bale is isolated from the baler chassis until transmitted to the load sensor. In both embodiments only the vertical load of the bale is directed to the load sensor. And in both embodiments the chute is free to be folded /unfolded or otherwise moved and up and down without adversely affecting weighing accuracy.

**Claims**

1. A bale-weighing apparatus, comprising:

   a support (30, 32, 34, 40) configured to couple with a bale source (10), a bale receiving structure (23) for receiving a bale from the bale source, wherein the support is configured to isolate from the bale source the vertical load of a bale on the bale receiving structure (23), and a load sensor (26, 28) configured to detect the isolated vertical load of the bale;

   **characterised in that** the support comprises a four-bar linkage (32, 34, 40) having three pivot points (42, 62, 64) and a fixed point (70).

2. The apparatus of claim 1, wherein the load sensor (26, 28) fixed to the support (30) is configured to detect the isolated vertical load by detecting a bending load.

3. An apparatus, comprising:

   a bale source (10) configured to provide a bale;
   a bale receiving structure (23) configured to receive the bale from the bale source (10);
   a support (30, 32, 34, 40) configured to couple with the bale source (10) and the bale receiving structure (23) and configured to isolate from the bale source the vertical load of the bale on the bale receiving structure; and
   a load sensor (26, 28) configured to detect the isolated vertical load of the bale,

   **characterised in that** the support comprises a four-bar linkage (32, 34, 40) having three pivot points (42, 62, 64) and a fixed point (70).

4. The apparatus of claim 3, wherein the load sensor (26, 28) is fixed to the support (30) and configured to detect the isolated vertical load by detecting a bending load.

5. A mobile baler (10) having a discharge opening (20) through which bales issue in succession as the baler travels along the ground, said baler comprising:

   a mobile chassis (12);
   a load sensor (26, 28) attached to said chassis (12);
   a support (30) fixed to said load sensor for deflecting the sensor under load; and
   a bale discharge chute (23) carried by said support (30) and said load sensor (26, 28) in position for receiving bales issuing from the discharge opening (20),
   wherein said support (30) is configured to isolate a vertical load of a bale on the bale discharge chute (23) and said load sensor being adapted to generate a signal for use in determining the weight of the bale on the chute,

**characterised by**:

said load sensor (26, 28) including an elongated beam (40) subjected to bending loads by said support (30), said chute (23), and a bale on the chute,

said support (30) including an upright member (58, 60) rigidly affixed at its lower end to the beam (40) at a fixed angle relative to the beam,

said support (30) further including a tension link (32, 34) connected between an upper end portion of said upright member (58, 60) and the chassis (12).

6. A baler as claimed in claim 5, said chute (23) being pivotal relative to said support (30) between a lowered bale-discharging position and a folded-up transport position.

7. A baler as claimed in claim 6, said chute (23) having a tension element (88, 90) extending between an outer end portion of the chute (23) and an upper end portion of the upright member (58, 60) to limit downward swinging of the chute (23) relative to the support (30).

8. A baler as claimed in claim 7, the length of said tension element (88, 90) being adjustable for adjusting the angle of incline of the chute (23) without adjusting the angle of the support (30) relative to the chassis (12).

9. A baler as claimed in claim 5, said tension link (32, 34) and said beam (40) of the load sensor (26, 28) both extending substantially horizontally when the baler is on level ground.

10. A baler as claimed in claim 9, said upright member (58, 60) having a longitudinal axis that extends substantially vertically when the baler is on level ground.

11. A baler as claimed in claim 10, said chute (23) being pivotal relative to said upright member (58, 60) about a transverse axis located adjacent said lower end portion of said upright member for up and down swinging movement relative to said upright member,

said chute (23) having a tension element (88, 90) connected between an outer portion of the chute and said upper end portion of said upright member.

12. A baler as claimed in claim 10, said tension link (32, 34) having at one end thereof a loose pivotal connection with said upright member (58, 60) and at the opposite end thereof a loose pivotal connection with said chassis (12).

13. A baler as claimed in claim 11 or claim 12, said load sensor (26, 28) being attached to said chassis (12) through a loose pivotal connection.

14. A baler as claimed in claim 5, said support upright member (58, 60) having a fore-and-aft extending socket (68) at a lower end portion thereof that receives said beam (40) of said load sensor (26, 28), said beam being fixedly received within said socket in a manner to prevent fore-and-aft pivoting movement of said upright member relative to said beam.

15. A baler as claimed in claim 14, said upright member (58, 60) having a longitudinal axis disposed at substantially right angles to a longitudinal axis of said beam (40).

16. A baler as claimed in claim 15, said beam (40) being fixed within said socket (68) by a pair of transverse bolt assemblies (70, 72) at spaced locations along the length of said beam.

17. A baler as claimed in claim 16, one of said bolt assemblies (70) serving to pivotally attach the chute (23) to said support (30) for up and down swinging movement of said chute relative to said support.

18. A mobile baler (10) having a discharge opening (20) through which bales issue in succession as the baler travels along the ground, said baler comprising:

a mobile chassis (12);
bale weighing apparatus (24) attached to said chassis (12); and
a bale discharge chute assembly (23) carried by said weighing apparatus,
said discharge chute assembly including a chute (22) and a diagonally extending tension element (88, 90) connected to an outer end portion of the chute,

**characterised by**:

said weighing apparatus (24) including a substantially horizontally extending load sensor (26, 28) having a connection with the chassis (12) at one end of the load sensor, a substantially vertically extending upright member (58, 60) having a connection with the load sensor (26, 28) at an opposite end of the load sensor, and a substantially horizontally extending tension link (32, 34) having connections at its opposite ends with the chassis (12) and the upright member (58, 60),
said diagonally extending tension element (88, 90) being connected to the upright member (58, 60) at a point above the connection of the upright member to the load sensor (26, 28),
one of said connections at opposite ends of the load sensor (26, 28) being freely pivotal about a transverse horizontal axis and the other connection being fixed against pivoting about a transverse horizontal axis,
said load sensor (26, 28) being adapted to generate a signal for use in determining the weight of a bale on the chute (22).

**Patentansprüche**

1. Vorrichtung zum Wiegen eines Ballens mit:

   einer Abstützung (30, 32, 34, 40), welche geeignet für eine Kopplung mit einer Ballen-Quelle (10) konfiguriert ist,
   einer Struktur (23), welche dem Empfangen eines Ballens von der Ballen-Quelle dient, wobei die Abstützung geeignet konfiguriert ist, um gegenüber der Ballen-Quelle die vertikale Last eines Ballens auf die den Ballen empfangende Struktur (23) zu isolieren, und
   einem Last-Sensor (26, 28), der geeignet konfiguriert ist zum Erfassen der isolierten vertikalen Last des Ballens, **dadurch gekennzeichnet, dass** die Abstützung eine Vierpunkt-Verbindung oder Vier-Stangen-Verbindung (32, 34, 40) aufweist mit drei Schwenk- oder Gelenkpunkten (42, 62, 64) und einem festen Punkt (70).

2. Vorrichtung nach Anspruch 1, wobei der Last-Sensor (26, 28), der an der Abstützung (30) fixiert ist, geeignet konfiguriert ist zur Erfassung der isolierten vertikalen Last durch Erfassung einer Biegelast.

3. Vorrichtung mit:

   einer Ballen-Quelle (10), die geeignet konfiguriert ist zur Bereitstellung eines Ballens,
   einer Struktur (23), die geeignet konfiguriert ist zum Empfangen oder zum Aufnehmen des Ballens von der Ballen-Quelle (10),
   einer Abstützung (30, 32, 34, 40), die geeignet konfiguriert ist für eine Kopplung mit der Ballen-Quelle (10) und der den Ballen empfangenden oder aufnehmenden Struktur (23) und zum Isolieren der vertikalen Last des Ballens auf die den Ballen empfangende oder aufnehmende Struktur gegenüber der Ballen-Quelle, und
   einem Last-Sensor (26, 28), der geeignet konfiguriert ist zur Erfassung der isolierten vertikalen Last des Ballens, **dadurch gekennzeichnet, dass** die Abstützung eine Vierpunkt-Verbindung oder Vier-Stangen-Verbindung (32, 34, 40) aufweist, die drei Schwenk- oder Gelenkpunkte (42, 62, 64) und einen festen Punkt (70) besitzt.

4. Vorrichtung nach Anspruch 3, wobei der Last-Sensor (26, 28) an der Abstützung (30) fixiert ist und geeignet konfiguriert ist, um die isolierte vertikale Last durch Erfassung einer Biegelast zu erfassen.

5. Mobile Balleneinrichtung (10) mit einer Abgabeöffnung (20), durch welche sukzessive Ballen ausgegeben werden mit Bewegung der Balleneinrichtung über den Boden, wobei die Balleneinrichtung aufweist:

   ein mobiles Chassis (12),
   einen Last-Sensor (26, 28), der an dem Chassis (12) befestigt ist,
   eine Abstützung (30), die an dem Last-Sensor derart fixiert ist, dass eine Auslenkung des Sensors unter Last erfolgt, und
   einen Ballen-Abgabe-Schacht (23), der an dem Ort zum Empfangen oder Aufnehmen von Ballen, die von der Abgabeöffnung (20) abgegeben werden, von der Abstützung (30) und dem Last-Sensor (26, 28) getragen ist, wobei die Abstützung (30) geeignet konfiguriert ist, um eine vertikale Last eines Ballens auf dem Ballen-Abgabe-Schacht (23) zu isolieren und wobei der Last-Sensor geeignet gestaltet ist zur Erzeugung eines Signals, welches verwendet werden kann zur Ermittlung des Gewichts des Ballens auf oder in dem Ballen-Abgabe-Schacht, **dadurch gekennzeichnet, dass**

der Last-Sensor (26, 28) einen länglichen Balken (40) aufweist, der durch die Abstützung (30), den Ballen-Abgabe-Schacht (23) und einen Ballen auf oder in dem Ballen-Abgabe-Schacht mit einer Biegebeanspruchung beaufschlagt ist,

wobei die Abstützung (30) ein aufrechtes Element (58, 60) besitzt, welches an seinem unteren Ende an dem Balkens (40) unter einem festen Winkel relativ zu dem Balken fest oder steif fixiert ist,

wobei die Abstützung (30) eine Spann- oder Zugkraft-Verbindung (32, 34) aufweist, über welche eine Verbindung zwischen einem oberen Endbereich des aufrechten Elements (58, 60) und dem Chassis (12) erfolgt.

6. Balleneinrichtung nach Anspruch 5, wobei der Ballen-Abgabe-Schacht (23) gegenüber der Abstützung (30) verschwenkbar ist zwischen einer abgesenkten Ballen-Abgabe-Position und einer angehobenen oder hochgeklappten Transportposition.

7. Balleneinrichtung nach Anspruch 6, wobei der Ballen-Abgabe-Schacht (23) ein Spann- oder Zugkraft-Element (88, 90) besitzt, welches sich zwischen einem äußeren Endbereich des Ballen-Abgabe-Schacht (23) und einem oberen Endbereich des aufrechten Elements (58, 60) erstreckt zur Begrenzung eines Schwingens oder Absenken des Schachtes (23) relativ zu der Abstützung (30) nach unten.

8. Balleneinrichtung nach Anspruch 7, wobei die Länge des Spann- oder Zugkraft-Elements (88, 90) anpassbar ist zur Anpassung des Neigungswinkels des Ballen-Abgabe-Schachts (23) ohne Anpassung des Winkels der Abstützung (30) relativ zu dem Chassis (12).

9. Balleneinrichtung nach Anspruch 5, wobei sich die Spann- oder Zugkraft-Verbindung (32, 34) und der Balken (40) des Last-Sensors (26, 28) beide im Wesentlichen horizontal erstrecken, wenn sich die Balleneinrichtung auf dem Grund- oder Boden-Niveau befindet.

10. Balleneinrichtung nach Anspruch 9, wobei das aufrechte Element (58, 60) eine Längsachse besitzt, die sich im Wesentlichen vertikal erstreckt, wenn sich die Balleneinrichtung auf dem Grund- oder Boden-Niveau befindet.

11. Balleneinrichtung nach Anspruch 10, wobei der Ballen-Abgabe-Schacht (23) relativ zu dem aufrechten Element (58, 60) um eine transversale Achse, die benachbart dem unteren Endbereich des aufrechten Elements angeordnet ist, verschwenkbar ist für eine schwingende Bewegung relativ zu dem aufrechten Element nach oben und unten, wobei der Ballen-Abgabe-Schacht (23) ein Spann- oder Zugkraft-Element (88, 90) besitzt, über welches eine Verbindung zwischen einem äußeren Bereich des Ballen-Abgabe-Schachtes und dem oberen Endbereich des aufrechten Elements erfolgt.

12. Balleneinrichtung nach Anspruch 10, wobei die Spann- oder Zugkraft-Verbindung (32, 34) an einem Ende eine lose Schwenkverbindung mit dem aufrechten Element (58, 60) und an dem gegenüberliegenden Ende eine lose Schwenkverbindung mit dem Chassis (12) besitzt.

13. Balleneinrichtung nach Anspruch 11 oder 12, wobei der Last-Sensor (26, 28) an dem Chassis (12) mittels einer losen Schwenkverbindung befestigt ist.

14. Balleneinrichtung nach Anspruch 5, wobei das aufrechte Element (58, 60) an einem unteren Endbereich einen sich in Längsrichtung erstreckenden Sockel oder eine Buchse oder einen Ansatz (68) besitzt, welcher den Balken (40) des Last-Sensors (26, 28) empfängt oder aufnimmt, wobei der Balken fest in dem Sockel, dem Ansatz oder der Buchse derart aufgenommen ist, dass eine Schwenkbewegung von vorne nach hinten oder in Längsrichtung des aufrechten Elements relativ zu dem Balken vermieden ist.

15. Balleneinrichtung nach Anspruch 14, wobei das aufrechte Element (58, 60) eine Längsachse besitzt, welche unter im Wesentlichen rechten Winkeln zu einer Längsachse des Balkens (40) angeordnet ist.

16. Balleneinrichtung nach Anspruch 15, wobei der Balken (40) mit oder in dem Sockel, dem Ansatz oder der Buchse (68) fixiert ist durch ein Paar von transversalen Bolzen-Baugruppen (70, 72), die an entlang der Länge des Balkens beabstandeten Orten angeordnet sind.

17. Balleneinrichtung nach Anspruch 16, wobei eine der Bolzen-Baugruppen (70) der schwenkbaren Befestigung des Ballen-Abgabe-Schachtes (23) an der Abstützung (30) dient zur Ermöglichung einer schwingenden Bewegung des Ballen-Abgabe-Schachtes nach oben und unten relativ zu der Abstützung.

18. Mobile Balleneinrichtung (10) mit einer Abgabeöffnung (20), durch welche nacheinander Ballen abgegeben werden mit Bewegung der Balleneinrichtung entlang des Bodens, wobei die Balleneinrichtung aufweist:

ein mobiles Chassis (12),
eine Ballen-Wiege-Vorrichtung (24), die an dem Chassis (12) befestigt ist, und
eine Abgabe-Schacht-Baugruppe (23) für Ballen, die durch die Wiege-Vorrichtung getragen ist,
wobei die Abgabe-Schacht-Baugruppe einen Ballen-Abgabe-Schacht (22) und ein sich diagonal erstreckendes Spann- oder Zugkraft-Element (88, 90), welches mit dem äußeren Endbereich des Ballen-Abgabe-Schachtes verbunden ist, aufweist,
**dadurch gekennzeichnet, dass**
die Wiege-Vorrichtung (24) einen sich im Wesentlichen horizontal erstreckenden Last-Sensor (26, 28) aufweist, der an einem Ende des Last-Sensors eine Verbindung mit dem Chassis (12) besitzt, ein sich im Wesentlichen vertikal erstreckendes aufrechtes Element (58, 60) an einem gegenüberliegenden Ende des Last-Sensors eine Verbindung mit dem Last-Sensor (26, 28) besitzt und eine sich im Wesentlichen horizontal erstreckende Spann- oder Zugkraft-Verbindung (32, 34) an ihren gegenüberliegenden Enden Verbindungen mit dem Chassis (12) und dem aufrechten Element (58, 60) besitzt, wobei das sich diagonal erstreckende Spann- oder Zugkraft-Element (88, 90) mit dem aufrechten Element (58, 60) an einem Punkt über der Verbindung des aufrechten Elements mit dem Last-Sensor (26, 28) verbunden ist,
wobei eine der genannten Verbindungen an gegenüberliegenden Enden des Last-Sensors (26, 28) frei um eine transversale horizontale Achse verschwenkbar ist und die andere Verbindung fixiert ist gegenüber einer Verschwenkung um eine transversale horizontale Achse,
wobei der Last-Sensor (26, 28) geeignet gestaltet ist zur Erzeugung eines Signals, welches verwendet werden kann zur Ermittlung des Gewichts eines Ballens auf oder in dem Ballen-Abgabe-Schacht (22).

## Revendications

1. Dispositif de pesage de balle, comprenant :

un support (30, 32, 34, 40) configuré de manière à être couplé à une source de balle (10), une structure de réception de balle (23) destinée à recevoir une balle à partir de la source de balle, dans lequel le support est configuré de manière à isoler par rapport à la source de balle, la charge verticale d'une balle sur la structure de réception de balle (23), et un capteur de charge (26, 28) configuré de manière à détecter la charge verticale isolée de la balle ;
**caractérisé en ce que** le support comprend une liaison à quatre barres (32, 34, 40) présentant trois points de pivot (42, 62, 64) et un point fixe (70).

2. Dispositif selon la revendication 1, dans lequel le capteur de charge (26, 28) fixé sur le support (30) est configuré de manière à détecter la charge verticale isolée en détectant une charge de flexion.

3. Dispositif, comprenant :

une source de balle (10) configurée de manière à délivrer une balle ;
une structure de réception de balle (23) configurée de manière à recevoir la balle à partir de la source de balle (10) ;
un support (30, 32, 34, 40) configuré de manière à être couplé à la source de balle (10) et la structure de réception de balle (23) et configuré de manière à isoler, par rapport à la source de balle, la charge verticale de la balle sur la structure de réception de balle ; et
un capteur de charge (26, 28) configuré de manière à détecter la charge verticale isolée de la balle,
**caractérisé en ce que** le support comprend une liaison à quatre barres (32, 34, 40) présentant trois points de pivot (42, 62, 64) et un point fixe (70).

4. Dispositif selon la revendication 3, dans lequel le capteur de charge (26, 28) est fixé sur le support (30) et configuré de manière à détecter la charge verticale isolée en détectant une charge de flexion.

**5.** Dispositif de formation de balle mobile (10) présentant une ouverture de déchargement (20) à travers laquelle les balles sont délivrées successivement lorsque le dispositif de formation de balle se déplace au sol, ledit dispositif de formation de balle comprenant :

un châssis mobile (12) ;
un capteur de charge (26, 28) fixé sur ledit châssis (12) ;
un support (30) fixé sur ledit capteur de charge afin de faire fléchir le capteur sous charge ; et
une goulotte de déchargement de balle (23) supportée par ledit support (30) et ledit capteur de charge (26, 28) en position de manière à recevoir les balles délivrées à partir de l'ouverture de déchargement (20),
dans lequel ledit support (30) est configuré afin d'isoler une charge verticale d'une balle sur la goulotte de déchargement de balle (23) et ledit capteur de charge est adapté afin de produire un signal à utiliser de manière à déterminer le poids de la balle sur la goulotte,
**caractérisé en ce que** :

ledit capteur de charge (26, 28) comporte une poutrelle allongée (40) soumise à des charges de flexion par ledit support (30), ladite la goulotte (23), et une balle sur la goulotte,
ledit support (30) comporte un montant (58, 60) fixé de manière rigide à son extrémité inférieure sur la poutrelle (40) sous un angle fixe par rapport à la poutrelle,
ledit support (30) comporte, en outre, une biellette de traction (32, 34) couplée entre une partie d'extrémité supérieure dudit montant (58, 60) et le châssis (12).

**6.** Dispositif de formation de balle selon la revendication 5, ladite goulotte (23) pouvant pivoter par rapport audit support (30) entre une position de déchargement de balle abaissée et une position de transport repliée.

**7.** Dispositif de formation de balle selon la revendication 6, ladite goulotte (23) présentant un élément de traction (88, 90) s'étendant entre une partie d'extrémité externe de la goulotte (23) et une partie d'extrémité supérieure du montant (58, 60) afin de limiter l'oscillation vers le bas de la goulotte (23) par rapport au support (30).

**8.** Dispositif de formation de balle selon la revendication 7, la longueur dudit élément de traction (88, 90) étant réglable afin d'ajuster l'angle d'inclinaison de la goulotte (23) sans ajuster l'angle du support (30) par rapport au châssis (12).

**9.** Dispositif de formation de balle selon la revendication 5, ladite biellette de traction (32, 34) et ladite poutrelle (40) du capteur de charge (26, 28) s'étendant tous deux sensiblement horizontalement lorsque le dispositif de formation de balle est au niveau du sol.

**10.** Dispositif de formation de balle selon la revendication 9, ledit montant (58, 60) présentant un axe longitudinal qui s'étend sensiblement verticalement lorsque le dispositif de formation de balle est au niveau du sol.

**11.** Dispositif de formation de balle selon la revendication 10, ladite goulotte (23) pouvant pivoter par rapport audit montant (58, 60) autour d'un axe transversal situé de manière adjacente à ladite partie d'extrémité inférieure dudit montant afin d'assurer un mouvement oscillant de haut en bas par rapport audit montant,
ladite goulotte (23) comportant un élément de traction (88, 90) couplé entre une partie externe de la goulotte et ladite partie d'extrémité supérieure dudit montant.

**12.** Dispositif de formation de balle selon la revendication 10, ladite biellette de traction (32, 34) présentant, à une de ses extrémités, une liaison pivotante lâche avec ledit montant (58, 60) et à son autre extrémité opposée, une liaison pivotante lâche avec ledit châssis (12).

**13.** Dispositif de formation de balle selon la revendication 11 ou 12, ledit capteur de charge (26, 28) étant fixé sur ledit châssis (12) par l'intermédiaire d'une liaison pivotante lâche.

**14.** Dispositif de formation de balle selon la revendication 5, ledit élément de support vertical (58, 60) présentant une cavité s'étendant longitudinalement (68) au niveau de sa partie d'extrémité inférieure qui reçoit ladite poutrelle (40) dudit capteur de charge (26, 28), ladite poutrelle étant reçue à demeure à l'intérieur de ladite cavité d'une manière à empêcher un mouvement pivotant longitudinal dudit montant par rapport à ladite poutrelle.

**15.** Dispositif de formation de balle selon la revendication 14, ledit montant (58, 60) présentant un axe longitudinal disposé sensiblement à angle droit par rapport à un axe longitudinal de ladite poutrelle (40).

**16.** Dispositif de formation de balle selon la revendication 15, ladite poutrelle (40) étant fixée à l'intérieur de ladite cavité (68) par une paire d'ensembles vissés transversaux (70, 72) à des emplacements espacés suivant la longueur de ladite poutrelle.

**17.** Dispositif de formation de balle selon la revendication 16, l'un desdits ensembles vissé (70) servant à fixer avec liberté de pivotement la goulotte (23) sur ledit support (30) de manière à assurer un mouvement oscillant vertical de ladite goulotte par rapport audit support.

**18.** Dispositif de formation de balle mobile (10) présentant une ouverture de déchargement (20) à travers laquelle les balles sont délivrées successivement à mesure que le dispositif de formation de balle se déplace au sol, ledit dispositif de formation de balle comprenant :

un châssis mobile (12) ;
un dispositif de pesage de balle (24) fixé sur ledit châssis (12) ; et
un ensemble de goulotte de déchargement de balle (23) supporté par ledit dispositif de pesage,
ledit ensemble de goulotte de déchargement comportant une goulotte (22) et un élément de traction s'étendant diagonalement (88, 90) couplé à une partie d'extrémité externe de la goulotte,
**caractérisé en ce que** :

ledit dispositif de pesage de balle (24) comporte un capteur de charge s'étendant sensiblement horizontalement (26, 28), présentant une liaison avec le châssis (12) à une première extrémité du capteur de charge, un montant s'étendant sensiblement verticalement (58, 60) présentant une liaison avec le capteur de charge (26, 28) à une extrémité opposée du capteur de charge, et une biellette de traction s'étendant sensiblement horizontalement (32, 34), présentant des liaisons au niveau de ses extrémités opposées avec le châssis (12) et le montant (58, 60), ledit élément de traction s'étendant diagonalement (88, 90) étant couplé au montant (58, 60) à un emplacement au-dessus de la liaison du montant avec le capteur de charge (26, 28), l'une desdites liaisons aux extrémités opposées du capteur de charge (26, 28) pouvant pivoter librement autour d'un axe transversal horizontal et l'autre liaison étant fixée de manière à pas pouvoir pivoter autour d'un axe transversal horizontal,
ledit capteur de charge (26, 28) étant adapté de manière à produire un signal à utiliser lors de la détermination du poids d'une balle sur le goulotte (22).

FIG. 1

FIG. 2

**FIG. 3**

FIG. 4

**FIG. 5**

**FIG. 6**

EP 2 477 476 B1

FIG. 7

/—200

202 — Receive load sensor readings or samples V(i) at regular time intervals

204 — Calculate moving averageof values V to solve for A(i)

206 — Calculate moving slope of A values to solve for S(i)

208 — Calculate movning average of S values to solve for SA(i)

210 — Is SA(i-T) a minimum of values from SA(i-2T) to SA(i)? — NO

YES

212 — Is SA(i-T) less than a slope threshold value? — NO

YES

214 — Find average of all values from A(i-T-j) to A(i-T+j) to solve for MIN

216 — Increase bale count by 1

218 — Is bale count greater than or equal to bale count threshold and MIN greater than desired percentage off from running average RA? — YES

NO

220 — Add MIN to RA

222 — If RA equals zero, set RA to equal MIN. Otherwise, divide MIN+RA by 2, then set RA equal to that new value

224 — If bale count = or > predetermined bale count threshold, set MIN equal to RA. Otherwise, MIN remains the same value solved for in step 214

Set MIN = to RA

226 — Determine maximum value of A from A(0) to A(i-T) to solve for MAX

228 — Solve for MAX-MIN → Convert MAX-MIN to weight — 230

# FIG. 8

302 — Operator baling until a bale drops off bale chute

⌐300

304 — Determine calculated weight of the bale using method 200 and a correctoin factor of 1

306 — Determine actual weight of bale using a scale

308 — Divide calculated weight by actual weight to determine the correction factor for use in converting MIN-MAX in method 200 to weight

**FIG. 9**

**FIG. 10**

FIG. 11

FIG. 12

FIG. 13

**EP 2 477 476 B1**

**Patent documents cited in the description**

- US 5760344 A